# FASCICULE DE BREVET EUROPEEN

(11) **EP 3 338 980 B1**
(45) Date de publication et mention de la délivrance du brevet: **29.07.2020**
(21) Numéro de dépôt: 17208361.0
(22) Date de dépôt: 19.12.2017
(51) Int. Cl.: B29C 33/04, B29C 33/38, B29C 43/36, B29C 43/52, B29C 33/20

(54) **MOULE DE COMPRESSION À SYSTÈME DE CHAUFFE RÉDUIT**
KOMPRESSIONSWERKZEUG MIT REDUZIERTEM HEIZSYSTEM
COMPRESSION MOULD WITH REDUCED HEATING SYSTEM

(30) Priorité: 26.12.2016 FR 1663379
(43) Date de publication de la demande: 27.06.2018
(73) Titulaire: Compagnie Plastic Omnium, 69007 Lyon (FR)
(72) Inventeur: TORRES, Olivier, 69230 SAINT-GENIS LAVAL (FR)
(74) Mandataire: LLR

(56) Documents cités:
- EP-A1- 1 110 692
- WO-A1-2011/122251
- DE-A1-102013 012 136

## Description

La présente invention concerne le domaine technique de la fabrication de pièces en matière plastique, notamment des pièces de carrosserie automobile, par un procédé de moulage par compression.

Pour fabriquer des pièces en matière plastique, en particulier en thermodurcissable (TD), il est connu d'utiliser un procédé de moulage par compression. Un tel procédé utilise un équipement de moulage comportant :
- un moule de compression muni d'un élément mobile (matrice) et d'un élément fixe (poinçon), les deux éléments possèdent des parties moulantes, typiquement en acier, formant une chambre de moulage en position fermée du moule ; le moule de compression comprend également plusieurs blocs d'acier formants une plaque d'éjection ;
- une presse, généralement hydraulique ou pneumatique type « vérin », permettant de déplacer l'élément mobile vers l'élément fixe.

Classiquement, on utilise une feuille de matière plastique, typiquement un matériau composite dit « SMC » (« sheet moulding compound ») constitué de résine thermodurcissable, de fibres de renfort, et souvent de charges et/ou de catalyseur (durcisseur).

Les éléments fixes et mobiles du moule permettent entre autre de remplir les fonctions suivantes : moulage de la pièce, guidage des éléments mobiles du moule, et vidage d'air dans la cavité de moulage.

Lors d'un moulage par compression, on applique une pression sur la feuille de matière plastique en réduisant le volume de la chambre de moulage au moyen de la presse afin que la feuille prenne la forme des parois internes du moule.

De plus, lors de cette opération, les éléments fixe et mobile sont tous deux régulés thermiquement à une température fixe afin de transformer la matière thermoplastique.

Cette régulation impacte l'ensemble des fonctions des éléments fixes et mobiles du moule, car il vaut mieux réguler l'ensemble de façon stable, plutôt que de subir des variations thermiques très difficiles à contrôler dans le temps.

Pour chauffer les éléments fixe et mobile, on utilise plusieurs circuits de régulation thermique : au minimum un circuit pour chaque zone de la pièce à mouler, et un circuit pour la masse de l'élément fixe, et un circuit pour la masse de l'élément mobile, la masse étant le volume général d'un des deux éléments autour de la partie moulante.

Enfin, les éléments fixe et mobile du moule sont isolés par des plaques extérieures aux parties moulantes, plaques qui sont isolantes thermiquement, afin de contenir la chaleur des éléments fixe et mobile.

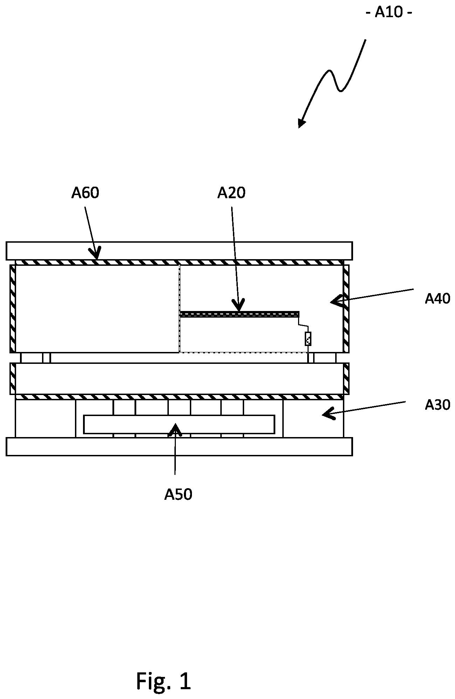

La figure 1 représente un moule de compression A10 selon l'art antérieur, et une pièce moulée A20. Les différents éléments du moule A10 y sont représentés :
- élément fixe (poinçon) A30
- élément mobile (matrice) A40
- plaque d'éjection A50
- plaques isolantes thermiquement A60

De par leur conception, les moules de compression rencontrent deux inconvénients majeurs.

Le premier inconvénient est d'ordre énergétique. Lors de l'opération de chauffage, il existe une perte de temps et une consommation d'énergie hors production excessive. En effet, pour être prêt à produire une pièce moulée, le moule doit être chauffé entre 4 et 8 heures afin d'atteindre sa température stabilisée de production, ce qui demande une anticipation obligatoire aux usines pour tout changement de moule lors d'un changement de série.

Pour cela les usines installent des zones de préchauffe proches des presses de production. Cette méthode consomme d'énorme quantité d'énergie (électricité - gaz) pour chauffer l'huile utilisée pour réguler la température du moule.

Le second inconvénient est lié au surcoût engendré par les moules actuels. En effet, l'acier des empreintes (éléments fixe et mobile) des moules est toujours meilleur que les autres blocs qui ne sont pas en contact avec la matière. On l'appelle l'acier noble. Il coûte 2 à 3 fois plus cher, et il constitue une part importante du prix du moule.

Or, les fonctions précitées des éléments fixes et mobiles augmentent la taille de ces empreintes lors de la conception du moule. Comme ces fonctions sont indispensables au fonctionnement de ce dernier, elles ne peuvent pas être supprimées pour réduire cette dimension, et donc pour réduire le coût des blocs d'acier à acheter. Le document WO 2011/122251 A1 divulgue un moule adapt pour matériau composite , comportant un élément mobile et un élément fixe, et que chacun des éléments comprend une partie moulante fixée de façon amovible à une plaque de support, la partie moulante étant équipée de moyens de régulation thermique, chacun des éléments comprenant une couche d'isolant thermique entre la partie moulante et la plaque de support.

L'invention a pour but de remédier à ces inconvénients en fournissant un moule de compression ayant une zone thermo-régulée de taille réduite.

A cet effet, l'invention a notamment pour objet un moule de compression pour matériau composite, comportant un élément mobile et un élément fixe. Chacun des éléments comprend une partie moulante fixée de façon amovible à une plaque de support, la partie moulante étant équipée de moyens de régulation thermique, chacun des éléments comprenant une couche d'isolant thermique entre la partie moulante et la plaque de support.

Ainsi, la fonction moulage est réalisée par les parties moulantes. Cette fonction est réduite au plus près de la zone en contact avec la matière plastique. Elle est la seule régulée (chauffée) en température. Cette fonction moulage est isolée, avec une couche d'isolant thermique. La quantité d'acier noble est du coup fortement réduite et le coût est également réduit (entre 20 et 30% de moins que pour un moule classique).

De plus, un tel moule atteint bien plus rapidement sa température stabilisée de production qu'un moule classique : il ne nécessite qu'une heure de préchauffage.

Un tel moule possède donc les avantages suivants :
- réduction du coût d'achat des aciers pour un moule (20-30% de moins) ;
- économie d'énergie importante pour chauffer les moules (meilleure isolation - moins de perte) ;
- économie de temps pour préchauffer les moules (1h contre 6h pour un moule classique) ;
- réduction des accidents (brûlures) du personnel autour des presses.

Le moule peut en outre comporter l'une ou plusieurs des caractéristiques suivantes, prises seules ou en combinaison :
- une face intérieure d'au moins une partie moulante est destinée à entrer en contact avec ledit matériau composite, et une face extérieure de cette partie moulante est au moins partiellement recouverte de la couche d'isolant thermique ;
- la face extérieure d'au moins une partie moulante en contact avec la plaque de support est totalement recouverte de la couche d'isolant thermique ;
- chaque partie moulante est en un premier matériau, et chaque plaque de support est en un deuxième matériau différent du premier matériau ;
- le premier matériau est un acier de haute qualité et le deuxième matériau est un acier de basse qualité ;
- chaque plaque de support s'étend sensiblement selon une direction horizontale ;
- chacun des éléments comprend en outre un élément de guidage relié respectivement à sa plaque de support et situé en dehors de la partie moulante, l'élément de guidage comportant un mécanisme de guidage de fermeture du moule ;
- l'élément de guidage est réalisé dans un même matériau que la plaque de support ;
- les moyens de régulation thermique comportent des circuits de fluide agencés dans un corps de la partie moulante ;
- chaque couche d'isolant thermique est réalisée en isolant performant ;
- au moins une plaque de support reste à une température plus faible que la température de la partie moulante du moule à laquelle il est fixé ;
- le moule de compression est dimensionné pour qu'un volume de chauffe constitue sensiblement un tiers du volume du moule, le reste étant isolé thermiquement pour rester relativement froid.

L'invention sera mieux comprise à la lecture des figures annexées, qui sont fournies à titre d'exemples et ne présentent aucun caractère limitatif, dans lesquelles :
- la figure 1 est un exemple de moule selon l'art antérieur ; l'élément mobile (matrice) est représenté en demi-coupe selon l'axe vertical au centre.
- la figure 2 est un exemple de moule selon l'invention ; l'élément mobile (matrice) est représenté en demi-coupe selon l'axe vertical au centre.
- les figures 3A et 3B, illustrent l'utilisation de blocs de centrage entre chaque partie moulante et chaque plaque de support, pour l'élément fixe (figure 3A) et pour l'élément mobile (figure 3B), avec une vue transversale selon un plan perpendiculaire à l'axe du mouvement de fermeture du moule et une vue en coupe selon les axes A-A' pour la figure 3A et B-B' pour la figure 3B ;
- les figures 4A et 4B, illustrent les différentes températures au sein d'un moule classique (figure 4A), et au sein du moule selon l'invention (figure 4B).
- les figures 5A et 5B, illustrent un exemple d'éléments de guidage pour l'élément fixe (figure 5A) et pour l'élément mobile (figure 5B).
- La figure 5C représente schématiquement les efforts subis (F et F') localement par les tasseaux lors du moulage d'un matériau composite.

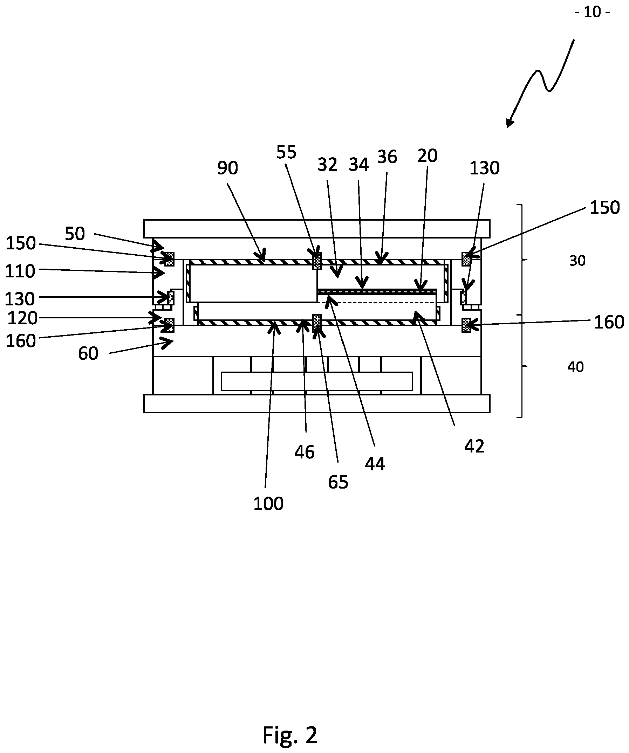

On se réfère maintenant à la figure 2 qui illustre un exemple de réalisation d'un moule de compression 10 pour matériau composite 20 selon l'invention.

Le moule de compression 10 comporte un élément mobile 30 et un élément fixe 40, délimitant, en position fermée, une empreinte de moulage.

Chacun des éléments fixe et mobile 30 et 40 comprend une partie moulante 32, 42 et une plaque de support 50, 60. La partie moulante 32 est fixée de façon amovible à la plaque de support 50. La partie moulante 42 est fixée de façon amovible à la plaque de support 60.

Chaque plaque de support 50 et 60 s'étend sensiblement selon une direction horizontale (perpendiculaire à la direction de fermeture du moule).

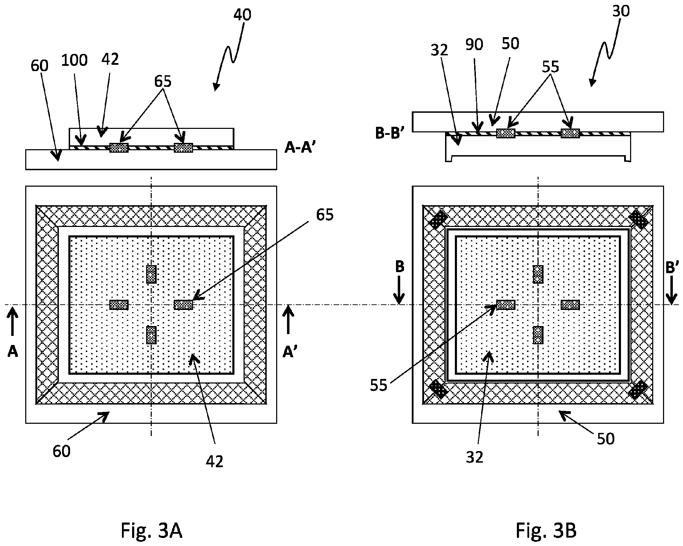

Comme illustré sur les figures 3A et 3B, entre chaque partie moulante 32, 42 et chaque plaque de support 50, 60, le moule 10 comporte des blocs de centrage 55, 65. Ils sont positionnés sur des axes X et Y afin de s'affranchir de la dilatation thermique des parties moulantes 32 et 42.

Chaque partie moulante 32, 42 est équipée de moyens de régulation thermique (non représentés sur les figures). Selon un exemple de réalisation, ces moyens de régulation thermique sont des circuits percés dans chaque bloc acier formant chaque partie moulante, et chaque bloc acier est isolé de chaque plaque support.

En effet, chacun des éléments fixe et mobile 30, 40 comprend une couche d'isolant thermique 90, 100 entre la partie moulante 32, 42 et la plaque de support 50, 60. De préférence sur les cinq faces d'une partie moulante.

Selon un mode de réalisation, la face intérieure 34, 44 de la partie moulante 32, 42 est destinée à entrer en contact avec le matériau composite 20 lors de l'opération de moulage. La face extérieure 36, 46 de la partie moulante 32, 42 est au moins partiellement recouverte de la couche d'isolant thermique 90, 100. De façon préférentielle, la plaque de support 50, 60 est totalement recouverte de la couche d'isolant thermique 90, 100. Ainsi, la plaque de support 50, 60 reste à une température plus faible que la température d'une partie moulante 32, 42 du moule 10.

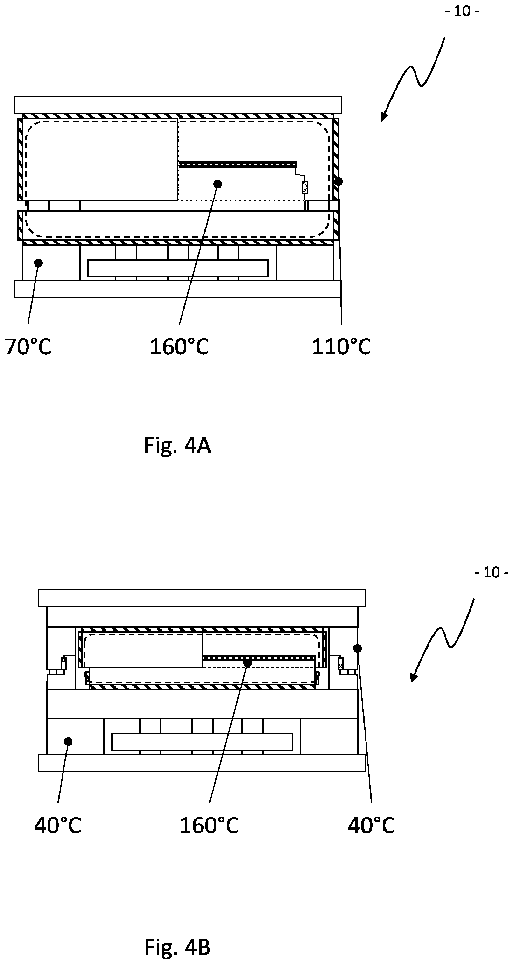

Les figures 4A et 4B, illustrent les différentes températures au sein d'un moule classique (figure 4A), et au sein du moule selon l'invention (figure 4B).

Les faces extérieures du moule 10 ont une température d'environ 40°C contre 110°C pour un moule standard. La dissipation thermique est donc fortement diminuée. Les risques d'accidents dus aux brûlures des opérateurs et techniciens travaillants autour de la presse sont aussi grandement diminués.

Les moyens de régulation thermique comportent des circuits de fluide agencés dans un corps de la partie moulante 32, 42.

La couche d'isolant thermique 90, 100 est réalisée en isolant performant, c'est-à-dire un isolant ayant une conductivité thermique inférieure à 0.1W/mK.

Le moule 10 est ainsi dimensionné pour que le volume de chauffe constitue sensiblement un tiers du volume du moule, le reste étant isolé thermiquement pour rester relativement froid.

De façon avantageuse, la partie moulante 32, 42 est en un premier matériau, et la plaque de support 50, 60 est en un deuxième matériau différent du premier matériau. On choisira de préférence un acier de haute qualité pour le premier matériau, appelé acier noble, c'est-à-dire un acier de dureté importante (supérieure à 30HRC), et un acier de basse qualité (dureté inférieure à 20HRC) pour le deuxième matériau.

La conception du moule 10 permet d'externaliser la fonction de guidage en périphérie du moule. Cette fonction est liée aux plaques support 50 et 60, qui sont liées à l'empreinte via les parties moulantes 32 et 42. La température de ces plaques supports 50, 60 et des éléments de guidage 110,120 est nettement réduite et se stabilise autour de 40°C. Cette température se rapproche de l'ajustage à température ambiante du moule et du coup réduit grandement la mise au point de ce dernier.

Chacun des éléments 30, 40 comprend en outre un élément de guidage 110, 120 relié respectivement à sa plaque de support 50, 60 et situé en dehors de la partie moulante 32, 42, l'élément de guidage 110, 120 comportant un mécanisme de guidage de fermeture du moule 10. De façon avantageuse, l'élément de guidage est réalisé dans un même matériau que la plaque de support 50, 60, par exemple dans un acier de dureté inférieure à 20HRC.

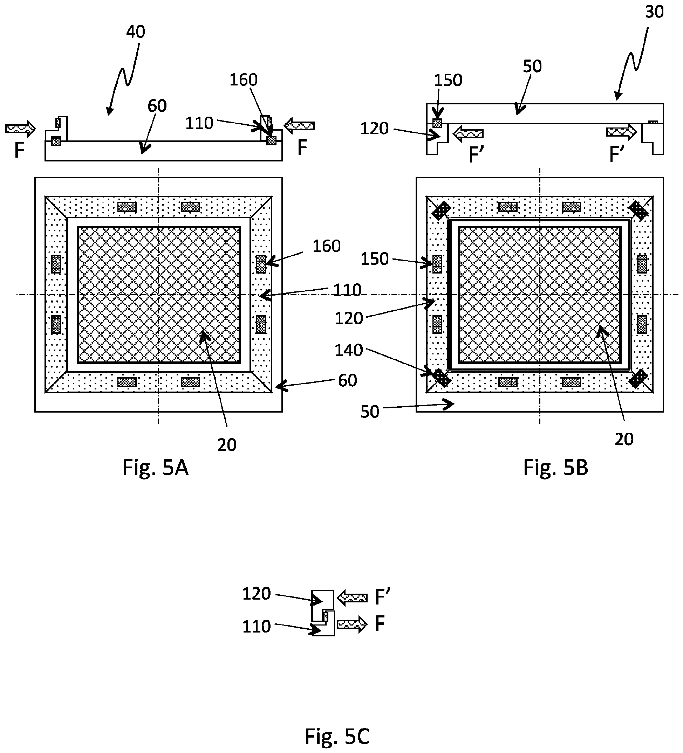

En référence, aux figures 5A et 5B, nous allons maintenant décrire plus en détail les éléments de guidage 110 et 120 car les éléments fixe et mobile ont deux parties séparées, ce qui est différent par rapport à l'art antérieur où ces éléments étaient monobloc. Cela engendre des contraintes techniques en plus par rapport à l'art antérieur. Les solutions techniques suivantes permettent de garantir que tous les ensembles du moule seront bien positionnés entre eux. De plus ces solutions permettent aussi de tenir la géométrie générale du moule lorsqu'il est soumis aux pressions de moulage.

Comme illustré sur ces figures, le moule 10 comporte :
- un premier tasseau 110 de ceinture fixé à la plaque support 50 ;
- un second tasseau 120 de ceinture est fixé à la plaque support 60.

Les deux tasseaux 110 et 120 ont des formes complémentaires permettant une fermeture et un guidage des parties moulantes 32 et 42. Au moins un des tasseaux, préférentiellement 120, est équipé de cales de guidage 130 (figure 2), qui vient s'intercaler entre les deux tasseaux 110 et 120 lors de la fermeture du moule 10.

Pour assurer la fiabilité du guidage en toute sécurité, les tasseaux 110 et 120 sont également munis de blocs de centrage 150, 160, ainsi que de renforts diagonaux 140.

Dans la figure 5C, on représente les efforts subis lors du moulage d'un matériau composite 20 sur une coupe locale de deux tasseaux 110 et 120. D'une part, l'effort F est subi par les tasseaux 110 de l'élément fixe 40, effort orienté de l'extérieur du tasseau vers le centre du moule, qui comprime l'ensemble des tasseaux quand on les considère de façon globale. D'autre part, l'effort F' est subi par les tasseaux 120 de l'élément mobile 30, effort orienté de l'intérieur du tasseau vers l'extérieur du moule, qui écarte entre eux les tasseaux quand on les considère de façon globale.

Dans la figure 5A, les tasseaux 110 sont conçus pour se bloquer entre eux lors de la compression due à l'effort F qu'ils subissent pendant le moulage, par exemple par une surface de contact en diagonale, telle que représentée sur la figure 5A. Les blocs de centrage 160 permettent de positionner avec précision les tasseaux sur la plaque support.

Dans la figure 5B, les tasseaux 120 sont aussi munis de blocs de centrage 150 permettant de positionner avec précision les tasseaux sur la plaque support. De plus, il est nécessaire d'empêcher l'écartement des tasseaux à cause de la force F' subie lors du moulage. Pour cela on utilise les renforts diagonaux 140.

### Liste des références

- 10: : moule de compression
- 20: : matériau composite
- 30: : élément mobile
- 32: : partie moulante de l'élément mobile 30
- 34: : face intérieure de la partie moulante 32
- 36: : face extérieure de la partie moulante 32
- 40: : élément fixe
- 42: : partie moulante de l'élément fixe 40
- 44: : face intérieure de la partie moulante 42
- 46: : face extérieure de la partie moulante 42
- 50: : plaque de support liée à l'élément mobile 30
- 55: : blocs de centrage de la plaque de support 50
- 60: : plaque de support liée à l'élément fixe 40
- 65: : blocs de centrage de la plaque de support 60
- 90: : couche d'isolant thermique de l'élément mobile 30
- 100: : couche d'isolant thermique de l'élément fixe 40
- 110: : élément de guidage de l'élément mobile 30
- 120: : élément de guidage de l'élément fixe 40
- 130: : cales de guidage
- 140: : renforts diagonaux.
- 150: : blocs de centrage des tasseaux 110
- 160: : blocs de centrage des tasseaux 120

## Revendications

1. Moule de compression (10) pour matériau composite (20), comportant un élément mobile (30) et un élément fixe (40), **caractérisé en ce que** chacun des éléments (30, 40) comprend une partie moulante (32, 42) et une plaque de support (50, 60), la partie moulante (32, 42) étant fixée de façon amovible à la plaque de support (50, 60), la partie moulante (32, 42) étant équipée de moyens de régulation thermique, chacun des éléments (30, 40) comprenant une couche d'isolant thermique (90, 100) entre la partie moulante et la plaque de support, et **en ce qu'**entre la partie moulante (32, 42) et la plaque de support (50, 60), le moule (10) comporte un bloc de centrage (55, 65) afin de s'affranchir de la dilatation thermique de la partie moulante (32, 42).

2. Moule de compression (10) selon la revendication 1, dans lequel une face intérieure (34, 44) d'au moins une partie moulante (32, 42) est destinée à entrer en contact avec ledit matériau composite (20), et une face extérieure (36, 46) de cette partie moulante (32, 42) est au moins partiellement recouverte de la couche d'isolant thermique (90, 100).

3. Moule de compression (10) selon la revendication précédente, dans lequel la face extérieure (36, 46) d'au moins une partie moulante (32, 42) en contact avec la plaque de support (50, 60) est totalement recouverte de la couche d'isolant thermique (90, 100).

4. Moule de compression (10) selon l'une des revendications précédentes, dans lequel chaque partie moulante (32, 42) est en un premier matériau, et chaque plaque de support (50, 60) est en un deuxième matériau différent du premier matériau.

5. Moule de compression (10) selon la revendication précédente, dans lequel le premier matériau est un acier de haute qualité, c'est-à-dire un acier de dureté supérieure à 30HRC, et le deuxième matériau est un acier de basse qualité, c'est-à-dire un acier de dureté inférieure à 20HRC.

6. Moule de compression (10) selon l'une des revendications précédentes, dans lequel chaque plaque de support (50, 60) s'étend sensiblement selon une direction horizontale.

7. Moule de compression (10) selon l'une des revendications précédentes, dans lequel chacun des éléments (30, 40) comprend en outre un élément de guidage (110, 120) relié respectivement à sa plaque de support (50, 60) et situé en dehors de la partie moulante (32, 42), l'élément de guidage (110, 120) comportant un mécanisme de guidage de fermeture du moule (10).

8. Moule de compression (10) selon la revendication précédente, dans lequel l'élément de guidage est réalisé dans un même matériau que la plaque de support (50, 60).

9. Moule de compression (10) selon l'une des revendications précédentes, dans lequel les moyens de régulation thermique comportent des circuits de fluide agencés dans un corps de la partie moulante (32, 42).

10. Moule de compression (10) selon l'une des revendications précédentes, dans lequel chaque couche d'isolant thermique (90, 100) est réalisée en isolant performant, c'est-à-dire un isolant ayant une conductivité thermique inférieure à 0.1 W/mK.

11. Moule de compression (10) selon l'une des revendications précédentes, dans lequel au moins une plaque de support (50, 60) reste à une température plus faible que la température de la partie moulante (32, 42) du moule (10) à laquelle il est fixé.

12. Moule de compression (10) selon l'une des revendications précédentes, dimensionné pour qu'un volume de chauffe constitue sensiblement un tiers du volume du moule (10), le reste étant isolé thermiquement pour rester relativement froid.

## Patentansprüche

1. Pressform (10) für Verbundmaterial (20), die ein bewegliches Element (30) und ein feststehendes Element (40) aufweist, **dadurch gekennzeichnet, dass** jedes der Elemente (30, 40) ein Formteil (32, 42) und eine Trägerplatte (50, 60) aufweist, wobei das bewegliche Teil (32, 42) abnehmbar an der Trägerplatte (50, 60) befestigt ist, wobei das Formteil (32, 42) mit Mitteln zur Wärmeregulierung ausgestattet ist, wobei jedes der Elemente (30, 40) eine thermische Isolierschicht (90, 100) zwischen dem Formteil und der Trägerplatte aufweist, und dadurch, dass die Form (10) zwischen dem Formteil (32, 42) und der Trägerplatte (50, 60) einen Zentrierblock (55, 65) aufweist, um die Wärmeausdehnung des Formteils (32, 42) zu vermeiden.

2. Pressform (10) nach Anspruch 1, bei der eine Innenfläche (34, 44) mindestens eines Formteils (32, 42) dazu bestimmt ist, mit dem Verbundmaterial (20) in Kontakt zu kommen, und eine Außenfläche (36, 46) dieses Formteils (32, 42) mindestens teilweise mit der Wärmedämmschicht (90, 100) bedeckt ist.

3. Pressform (10) nach dem vorstehenden Anspruch, wobei die Außenfläche (36, 46) mindestens eines Formteils (32, 42), das mit der Trägerplatte (50, 60) in Kontakt steht, vollständig mit der Wärmeisolierschicht (90, 100) bedeckt ist.

4. Pressform (10) nach einem der vorstehenden Ansprüche, wobei jedes Formteil (32, 42) aus einem ersten Material besteht und jede Trägerplatte (50, 60) aus einem zweiten Material besteht, das sich von dem ersten Material unterscheidet.

5. Pressform (10) nach dem vorstehenden Anspruch, wobei das erste Material ein Stahl hoher Qualität ist, d.h. ein Stahl mit einer Härte von mehr als 30 HRC, und das zweite Material ein Stahl niedriger Qualität ist, d.h. ein Stahl mit einer Härte von weniger als 20 HRC.

6. Pressform (10) nach einem der vorstehenden Ansprüche, wobei sich jede Trägerplatte (50, 60) im Wesentlichen in horizontaler Richtung erstreckt.

7. Pressform (10) nach einem der vorstehenden Ansprüche, bei der jedes der Elemente (30, 40) außerdem ein Führungselement (110, 120) aufweist, das jeweils mit seiner Trägerplatte (50, 60) verbunden und außerhalb des Formteils (32, 42) angeordnet ist, wobei das Führungselement (110, 120) einen Führungsmechanismus zum Schließen der Form (10) aufweist.

8. Pressform (10) nach dem vorstehenden Anspruch, bei der das Führungselement aus dem gleichen Material wie die Trägerplatte (50, 60) hergestellt ist.

9. Pressform (10) nach einem der vorstehenden Ansprüche, bei der die Mittel zur Wärmeregulierung Fluidkreisläufe umfassen, die in einem Körper des Formteils (32, 42) angeordnet sind.

10. Pressform (10) nach einem der vorstehenden Ansprüche, wobei jede Wärmedämmschicht (90, 100) aus einer Hochleistungsisolierung besteht, d.h. einer Isolierung mit einer Wärmeleitfähigkeit von weniger als 0,1 W/mK.

11. Pressform (10) nach einem der vorstehenden Ansprüche, bei der mindestens eine Trägerplatte (50, 60) auf einer niedrigeren Temperatur bleibt als die Temperatur des Formteils (32, 42) der Form (10), an der sie befestigt ist.

12. Pressform (10) nach einem der vorstehenden Ansprüche, die so dimensioniert ist, dass ein Heizvolumen im Wesentlichen ein Drittel des Volumens der Form (10) ausmacht, wobei der Rest wärmeisoliert ist, um relativ kalt zu bleiben.

## Claims

1. Compression mold (10) for composite material (20), comprising a movable element (30) and a fixed element (40), **characterized in that** each of the elements (30, 40) comprises a molding part (32, 42) and a support plate (50, 60), the molding part (32, 42) being detachably fixed to the support plate (50, 60), the molding part (32, 42) being equipped with a means of thermal regulation, each of the elements (30, 40) comprising a layer of thermal insulator (90, 100) between the molding part and the support plate, and **in that** between the molding part (32, 42) and the support plate (50, 60), the mold (10) comprises a centering block (55, 65) in order to overcome the thermal expansion of the molding part (32, 42).

2. Compression mold (10) according to claim 1, in which an internal face (34, 44) of at least one molding part (32, 42) is intended to come into contact with said composite material (20), and an external face (36, 46) of this molding part (32, 42) is at least partially covered with the thermal insulation layer (90, 100).

3. Compression mold (10) according to the preceding claim, in which the external face (36, 46) of at least one molding part (32, 42) in contact with the support plate (50, 60) is completely covered with the thermal insulation layer (90, 100).

4. Compression mold (10) according to one of the preceding claims, in which each molding part (32, 42) is made of a first material, and each support plate (50, 60) is made of a second material different from the first material.

5. Compression mold (10) according to the preceding claim, in which the first material is a high quality steel, that is to say a steel of greater than 30HRC hardness, and the second material is a low quality steel, that is to say a steel of lower than 20HRC hardness.

6. Compression mold (10) according to one of the preceding claims, in which each support plate (50, 60) extends substantially in a horizontal direction.

7. Compression mold (10) according to one of the preceding claims, in which each of the elements (30, 40) further comprises a guide element (110, 120) connected respectively to its support plate (50, 60) and located outside the molding part (32, 42), the guide element (110, 120) comprising a mold closing guide mechanism (10).

8. Compression mold (10) according to the preceding claim, in which the guide element is made of the same material as the support plate (50, 60).

9. Compression mold (10) according to one of the preceding claims, in which the means of thermal regulation comprise fluid circuits arranged in a body of the molding part (32, 42).

10. Compression mold (10) according to one of the preceding claims, in which each thermal insulation layer (90, 100) is made of a high-performance insulator, that is to say an insulator having a thermal conductivity of less than 0.1W/mK.

11. Compression mold (10) according to one of the preceding claims, in which at least one support plate (50, 60) remains at a temperature lower than the temperature of the molding part (32, 42) of the mold (10) to which it is attached.

12. Compression mold (10) according to one of the preceding claims, dimensioned so that the heating volume constitutes substantially one third of the volume of the mold (10), the rest being thermally insulated to remain relatively cold.
